**Europäisches Patentamt**

**European Patent Office**

**Office européen des brevets**

(19)

(11) Veröffentlichungsnummer: **0 324 893**

**A1**

# (12) EUROPÄISCHE PATENTANMELDUNG

(21) Anmeldenummer: **88110676.9**

(22) Anmeldetag: **05.07.88**

(51) Int. Cl.⁴: **E04D 13/16 , E04D 3/35 , C08J 9/42**

(30) Priorität: **19.01.88 DE 8800527 U**
**17.02.88 DE 8802006 U**

(43) Veröffentlichungstag der Anmeldung:
**26.07.89 Patentblatt 89/30**

(84) Benannte Vertragsstaaten:
**AT BE CH DE ES FR GB IT LI LU NL SE**

(71) Anmelder: **Roland-Werke Dachbaustoffe u.**
**Bauchemie Algostat GmbH & Co.**
**Zeppelinstrasse 1**
**D-2807 Achim(DE)**

(72) Erfinder: **Marzouki, Taieb**
**Rosenweg 8**
**D-2815 Langwedel-Etelsen(DE)**
Erfinder: **Thost, Ulrich E.**
**Birkenhof 2**
**D-2820 Bremen 70(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Abdeckelement sowie Verfahren zur Herstellung desselben.**

(57) Abdeckelemente mit zumindest teilweise aus Phenolharzschaum gebildeter Dämmung behalten zwar im Brandfalle ihre holzähnliche Struktur, sind aber selbst brennbar und glimmen nach. Das neue Abdeckelement (15) soll über einen möglichst langen Zeitraum unbrennbar sein und nicht nachglimmen.

Der Phenolharzschaum des Abdeckelements (15) enthält einen schaumbildenden Brandschutzzusatz. Der Zusatz wird erst im Brandfalle, d.h. bei höheren Temperaturen, wirksam und schließt dann die Poren des Phenolharzschaumes.

Das Abdeckelement (15) wird vorzugsweise zur Abdeckung von Flachdächern, zum Beispiel Trapezdächern, verwendet.

Fig. 2

## Abdeckelement sowie Verfahren zur Herstellung desselben

Die Erfindung betrifft ein Abdeckelement gemäß dem Oberbegriff des Anspruchs 1 und ein Verfahren zur Herstellung eines derartigen Abdeckelements gemäß dem Oberbegriff des Anspruchs 11.

Abdeckelemente der hier angesprochenen Art finden als Dämmschutz im Zusammenhang mit Leichtbau-Dachabdeckungen (Trapezblechdecken), aber auch als Wandverkleidungen Verwendung. Die Dämmschicht eines solchen Abdeckelements besteht vielfach vollständig aus Phenolharzschaum. Vorteilhaft bei diesem Schaum ist, daß seine Struktur auch im Brandfalle über einen längeren Zeitraum erhalten bleibt. Eine Verformung oder gar ein Fließen unter Wärmeeinwirkung findet nicht statt.

Nachteilig ist jedoch die Neigung zum Nachglimmen beim Phenolharzschaum im Brandfalle.

Aufgabe der vorliegenden Erfindung ist es daher, ein kostengünstiges Abdeckelement zu schaffen, bei dem im Brandfalle die Dämmung über einen möglichst langen Zeitraum unbrennbar bleibt und ein etwaiges Nachglimmen nicht auftritt.

Erfindungsgemäß wird die Aufgabe durch ein Abdeckelement des Anspruchs 1 gelöst. Danach sin die Poren des ausgehärteten Phenolharzschaumes durch einen schaumbildenden Brandschutzzusatz verschlossen. Dadurch ist die Sauerstoffzufuhr zum Phenolharzschaum unterbrochen und dieser als solcher unbrennbar. Auch ist ein Nachglimmen im Brandfalle nicht mehr möglich.

Vorteilhafterweise besteht der schaumbildende Brandschutzzusatz aus einem Material, das erst nach Wärmezufuhr und oberhalb der Verarbeitungstemperatur des Phenolharzes schaumbildend wirkt, insbesondere bei Temperaturen oberhalb von 180° bis 200° C, zum Ausschäumen der Poren des Phenolharzschaums im Brandfalle. Die für die Reaktion des schaumbildenden Brandschutzzusatzes erforderliche Wärme wird dadurch einem eventuellen Feuer entzogen und muß nicht schon bei der Herstellung des Abdeckelements zugeführt werden.

Zweckmäßigerweise setzt sich der schaumbildende Brandschutzzusatz des Abdeckelements aus einem Kohlenstofflieferanten (beispielsweise Pentaerythrit, Dextrin etc.), einem Treibmittel (beispielsweise Harnstoff, Melamin, Dicyandiamid oder dgl.), ein Schaumstabilisator (z.B. Phosphat, insbesondere Ammoniumphosphat) und einem Bindemittel (beispielsweise Polyvenylacetatcopolymer) zusammen. Ein solcher Brandschutzzusatz verleiht bei einfacher und kostengünstiger Herstellbarkeit dem Phenolharzschaum ein besonders vorteilhaftes Verhalten im Brandfalle.

Weiterhin wird bei einer bevorzugten Ausführungsform des Abdeckelements vorgeschlagen, der Dämmung wenigstens eine Brandschutzschicht aus Phenolharzschaum und darin eingelagertem Brandschutzzusatz zuzuordnen. In diesem Falle ist die Dämmung mehrschichtig ausgebildet, wobei nur die im Brandfalle nach außen weisende Brandschutzschicht aus Phenolharzschaum besteht. Die Brandschutzschicht bietet dadurch einen flächendeckenden Schutz der darüberliegenden Dämmschicht und eventuellen weiteren Abdeckschichten, die dadurch im Brandfalle geschützt werden und damit aus einem im Vergleich zum Phenolharzschaum preiswerteren Material mit schlechteren Eigenschaften im Brandfalle hergestellt sein können. Ein derart gebildetes Abdeckelement läßt sich somit besonders kostengünstig herstellen, da nur ein Teil desselben, vorzugsweise eine Schicht, aus im Vergleich zu anderem Schaumstoff (Polystyrolschaum) teureren Phenolharzschaum mit darin eingelagertem Brandschutzzusatz hergestellt sein kann, wobei in bezug auf die Dämmeigenschaften einer solchen Dämmung keinerlei Einbußen durch die Phenolharz-Brandschutzschicht entstehen, da Phenolharz annähernd die gleichen Dämmeigenschaften wie andere Kunststoff-Schaummaterialien aufweist.

Weiterhin wird vorgeschlagen, sämtliche Schichten der Dämmung, insbesondere die Brandschutzschicht und eine darüber angeordnete Dämmschicht aus beispielsweise Polystyrolschaum, miteinander zu verbinden. Damit erhält das erfindungsgemäße Abdeckelement Eigenschaften eines Verbundmaterials, wudurch es sich als Ganzes wie herkömmliche Abdeckelemente verlegen läßt.

Zweckmäßigerweise erfolgt die Verbindung der Brandschutzschicht mit der Dämmschicht - oder weiteren Schichten-durch einen Kleber, und zwar vorzuweise einen Einkomponenten-Polyurethan-Kleber. Dieser läßt eine einfache, dau erhafte Verbindung sämtlicher Schichten des erfindungsgemäßen Abdeckelements zu, wobei der zur Bildung der Brandschutzschutzschicht dienende Phenolharzschaum wegen seiner leichten Verklebbarkeit mit Polystyrolschaum in vorteilhafter Weise zu einer dauerhaften Verklebung beiträgt. Auch läßt sich das derart verklebte mehrschichtige Abdeckelement noch rollen, ist also zur Herstellung von aufgerollten Bahnen geeignet.

Nach einem weiteren Vorschlag der Erfindung sind bei plattenförmigen Abdeckelementen die Ränder wenigstens der Brandschutzschicht mit einer umlaufenden Profilierung versehen. Im einfachsten Falle kann diese aus einem (einstufigen) Stufenfalz gebildet sein. Durch diese Profilierung wird verhindert, daß an den Stoßstellen nebeneinanderliegender plattenförmiger Abdeckelemente bzw. nebeneinander verlegter streifenförmiger Abdeckelemente im Falle eines Brandes die entstehende Hitze oder sogar Flammen durch die Stoßnaht ungehindert an die zu schützende, aus Polystyrolschaum gebildete Schicht der Dämmung, nämlich die Dämmstoffschioht, gelangen kann.

Das erfindungsgemäße Verfahren zur Herstellung eines Abdeckelements, bei dem vorzugsweise Phenolharz zur Bildung der Dämmung oder eines Teils derselben mit Härter und Treibmittel versetzt und dann verschäumt und ausgehärtet wird, sieht vor, daß dem Phenolharz vor dem Vermischen mit Härter und Treibmittel ein schaumbildender Brandschutzzusatz hinzugefügt und mit diesem vermischt wird. Der Brandschutzzusatz ist so im Phenolharz mit Sioherheit fein verteilt und garantiert unter entsprechender Wärmeeinwirkung ein Schließen aller Poren des Phenolharzschaums.

Weitere vorteilhafte verfahrensmäßige Maßnahmen sind den Unteransprüchen zu entnehmen.

Die Erfindung wird nachfolgend anhand der Zeichnung näher erläutert. In dieser zeigen:

Fig. 1 auf einer Tragschicht einer Dachabdeckung angeordnete Abdeckelemente nach einem ersten Ausführungsbeispiel der Erfindung,

Fig. 2 auf der Tragschicht der Dachabdeckung angeordnete Abdeckelemente gemäß eines zweiten Ausführungsbeispiels der Erfindung,

Fig. 3 einen vergrößert dargestellten Ausschnitt aus der Fig. 2 im Bereich zweier zusammengesetzter Abdeckelemente, und

Fig. 4 eine Draufsicht auf mehrere zusammengesetzte Abdeckelemente der Fig. 2 und 3.

Die gezeigten Ausführungsbeispiele betreffen Dachabdeckungen, bei denen eine Dämmung und ggf. weitere Schichten auf einer aus Stahltrapezblech gebildeten Tragschicht 10 angeordnet sind.

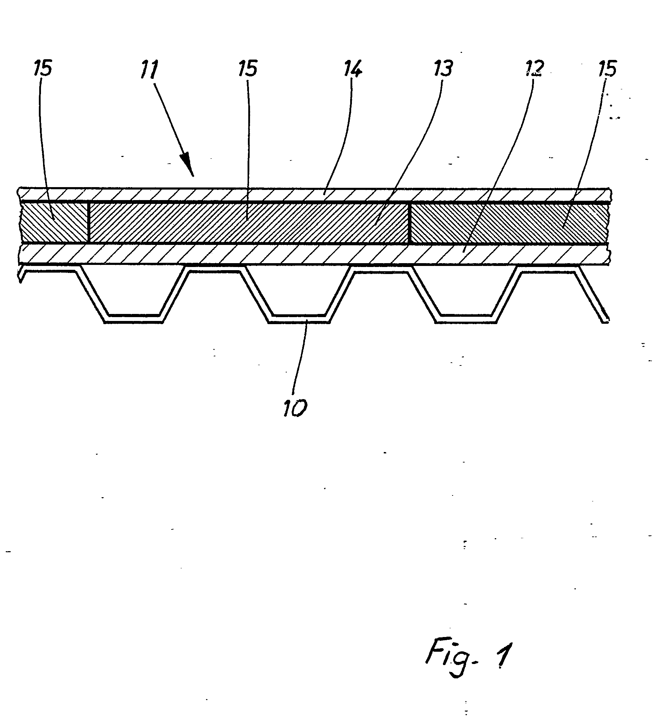

Die in der Fig. 1 dargestellte Dachabdeckung 11 setzt sich aus einer auf der Tragschicht 10 liegenden Dampfsperre 12, einer darauf angeordneten Dämmung, nämlich einer einlagigen Brandschutzschicht 13, sowie einer obenliegenden Abdichtungsbahn 14 zusammen.

Die Brandschutzschicht 13 ist aus einzelnen, nebeneinander angeordneten plattenförmigen Abdeckelementen 15 zusammengesetzt. In der in der Fig. 1 gezeigten Ausführungsform sind die Dampfsperre 12 und die Abdichtungsbahn 14 als Bahnen ausgeführt und demgemäß nicht Bestandteile des Abdeckelements 15. Abweichend von der in der Fig. 1 gezeigten Ausführungsform kann das Abdeckelement 15 neben der Brandschutzschicht 13 weitere Schichten aufweisen.

Die in der Fig. 1 dargestellten die Brandschutzschicht 13 bildenden Abdeckelemente 15 sind nebeneinanderliegend auf der Dampfsperre 12 und unter der Abdichtungsbahn 14 angeordnet. Die Brandschutzschicht 13 besteht hier vollständig aus einem Phenolharzschaum, der einen schaumbildenden Brandschutzzusatz enthält. Dieser wird erst nach Zufuhr von Wärme wirksam und ist so ausgewählt, daß er erst oberhalb der Verarbeitungstemperatur des Phenolharzes reagiert und durch zusätzliche Schaumbildung die Poren des Phenolharzschaumes schließt. Zweckmäßigerweise liegt die Reaktionstemperatur des schaumbildenden Brandschutzzusatzes zwischen 180° bis 200° C, bzw. etwas oberhalb davon.

Der schaumbildende Brandschutzzusatz ist vor der Verarbeitung mit dem Phenolharz pulverförmig und besteht aus einem Kohlenstofflieferanten, einem Treibmittel, ein Schaumstabilisator und ggf. Bindemittel. Als Kohlenstofflieferant kommen vorzugsweise Pentaerythrit, Dextrin oder Stärke (Weizenstärke bzw. Kartoffelstärke) in Betracht. Das Treibmittel, das als Gerüst für den Kohlenstofflieferanten dient, kann aus Harnstoff, Melamin oder Dicyandiamid bestehen. Als Schaumstoffstabilisator kommen Phosphate, insbesondere Ammoniumpolyphosphat, in Betracht. Das Bindemittel besteht vorzugsweise aus Polyvenylacetatcopolymer. Ggf. kann das Bindemittel entfallen.

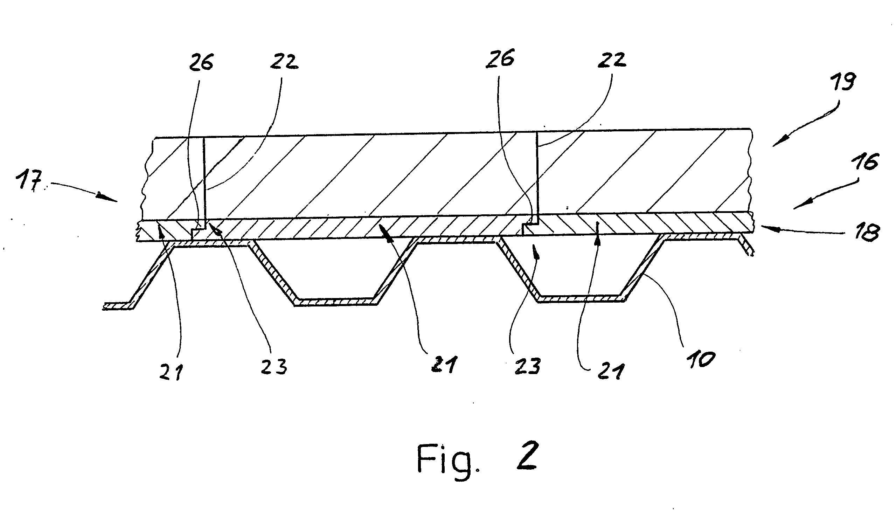

Bei dem in den Fig. 2 bis 3 gezeigten zweiten Ausführungsbeispiel der Erfindung handelt es sich um eine Dachabdeckung 16, bei der auf der Tragschicht 10 aus Stahltrapezblech im gezeigten Falle lediglich eine Dämmung 17 angeordnet ist. Die Dämmung 17 ist vorzugsweise lose auf der Tragschicht 10 aufgelegt. Zwischen der Dämmung 17 und der Tragschicht 10 kann eine hier nicht gezeigte Dampfsperre (ähnlich der Fig. 1) angeordnet sein.

Die Dämmung 17 ist in erfindungsgemäß besonderer Weise ausgebildet. Diese setzt sich nämlich zusammen aus einer unteren, zur Tragschicht 10 gerichteten Brandschutzschicht 18 und einer darauf angeordneten Dämmschicht 19. Die Dämmschicht 19 und die Brandschutzschicht 18 sind im vorliegenden Ausführungsbeispiel miteinander verbunden, und zwar durch einen Kleber, insbesondere einen Einkomponenten-Polyurethan-Kleber 20. Alternativ kann auch ein Adhesiv-Kleber Verwendung finden.

Im vorliegenden Ausführungsbeispiel besteht die Dämmung 17 aus einer Vielzahl zusammengesetzter plattenförmiger Abdeckelemente 21 mit einer hier rechteckförmigen Grundfläche. Zur Bildung einer durchgehenden Dämmung sind die Abdeckelemente 21 an verzahnten Stoßflächen 22 zusammengesetzt.

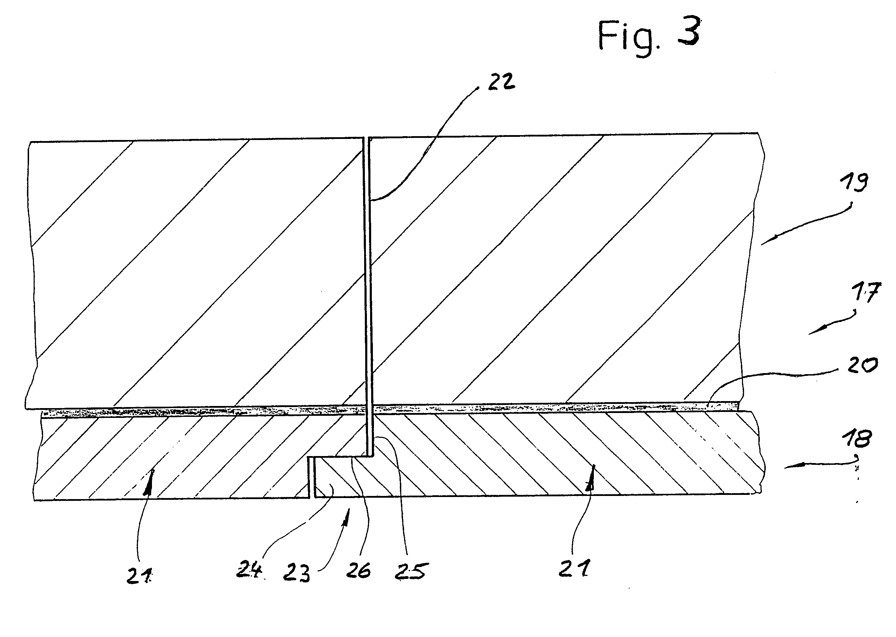

Die Verzahnung der Stoßflächen 22 wird gebildet durch eine Profilierung der Brandschutzschicht 18 an den Abdeckelementen 21. Dazu ist die Brandschutzschicht 18 jedes Abdeckelements 21 umlaufend profiliert, wobei die Profilierung hier als Stufenfalz 23 ausgebildet ist. Wie insbesondere die Fig. 3 erkennen läßt, wird der Stufenfalz 23 gebildet aus einem etwa rechteckförmigen Vorsprung 24 und einer darüberliegenden, ebenfalls rechteckförmigen Nut 25, die etwa den Abmessungen des Vorsprungs 24 entspricht. Zusammen weisen der Vorsprung 24 und die darüberliegende Nut 25 eine Höhe auf, die etwa der Dicke der Brandschutzschicht 18 entspricht. Zwischen dem Vorsprung 24 und der Nut 25 entsteht so eine im Bereich der halben Dicke der Brandschutzschicht 18 parallel zur Ebene derselben (horizontal) verlaufende Anlagefläche 26.

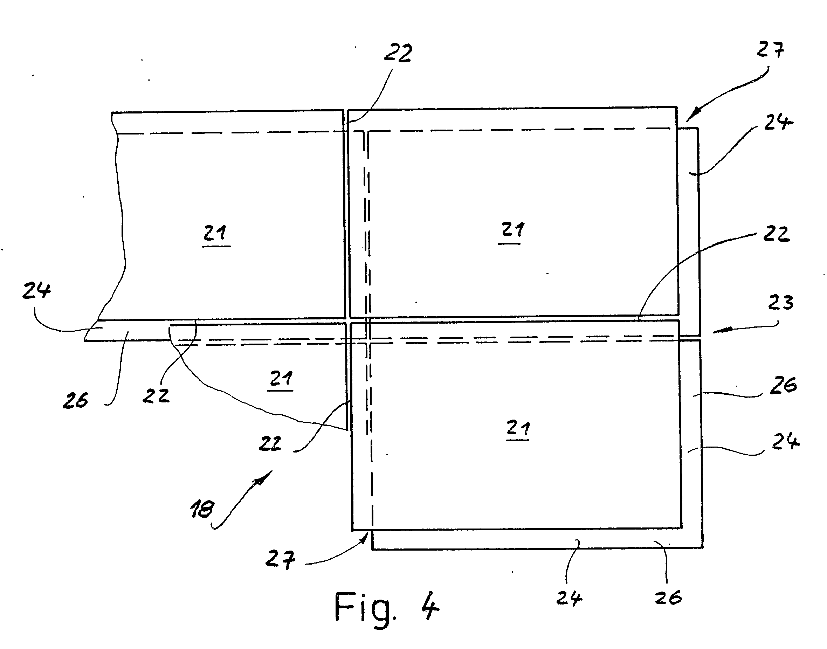

Wie die Fig. 3 und 4 erkennen lassen, ist der Stufenfalz 23 an allen Rändern der Brandschutzschichten 18 gleichermaßen ausgebildet, jedoch an gegenüberliegenden, parallelen Rändern mit unterschiedlicher Relativlage versehen, nämlich spiegelverkehrt. Dadurch liegen dann - wie die Fig. 4 besonders deutlich erkennen läßt - an einem (schma len Rand und daran angrenzendem (langen) Rand die Vorsprünge 24 im Bereich der unteren Hälfte der Brandschutzschicht 18, während an den übrigen (gegenüberliegenden) Rändern die Vorsprünge 24 im Bereich der oberen Hälfte der Brandschutzschicht 18 angeordnet sind. Zwei diagonal gegenüberliegende Eckbereiche jedes Abdeckelements 21 verfügen über quadratische Ausnehmungen 27, deren Kantenlänge der Breite des Vorsprungs 24 bzw. der Nut 25 entsprechen. Somit kann man sich (in Draufsicht gemäß der Fig. 4 gesehen) jede Brandschutzschicht 18 aus zwei gleich großen rechteckigen Grundkörpern zusammengesetzt denken, die bezüglich zweier rechtwinklig verlaufender, aneinander anschließender Ränder um die Breite der Nut 25 bzw. des Vorsprungs 24 versetzt zueinander zusammengefügt sind, wobei jeder Grundkörper etwa die halbe Dicke der gesamten Brandschutzschicht 18 aufweist. Dadurch lassen sich die plattenförmigen Abdeckelemente 21 bei entsprechender Relativlage zueinander zu einer flächendeckenden Dämmung 17 zusammensetzen, wie aus der Fig. 4 ersichtlich ist. Aus dieser Figur wird auch deutlich, daß die (horizontalen) Anlageflächen 26 der Stufenfalze 23 Labyrinthe in den Stoßflächen 22 bilden, die einen unmittelbaren Angriff der infolge Brandeinwirkung entstehenden Hitze oder gar Flammen an der hitzeempfindlichen Dämmschicht 19 verhindern.

Das Dickenverhältnis der einzelnen Schichten der Dämmung 17 ist derart gewählt, daß die Brandschutzschicht 18 um ein Mehrfaches dünner als die Dämmschicht 19 ist, nämlich nur 10 - 30 % der Dicke der Dämmschicht 19 aufweist. Bei einem Abdeckelement 21 mit einer Gesamtdicke von beispielsweise 100 mm hat es sich als vorteilhaft erwiesen, die Dämmschicht 19 etwa 70 mm und die Brandschutzschicht 18 etwa 30 mm dick auszubilden. Alternativ hierzu kann die Dämmschicht 19 etwa 90 mm und die Brandschutzschicht 18 etwa 10 mm dick ausgebildet sein.

Als Material für die Dämmschicht 19 kommt preiswerter Schaumkunststoff, insbesondere Polystyrolschaum in Betracht. Da dieser unter Hitzeeinwirkung zum Abtropfen und zur Freisetzung brennbarer Gase neigt, besteht die Brandschutzschicht 18 aus einem diese Eigenschaft nicht aufweisenden Material, nämlich erfindungsgemäß Phenolharzschaum.

Besonders vorteilhaft ist es, die Brandschutzschicht 18 wie beim ersten Ausführungsbeispiel mit einem schaumbildenden Brandschutzzusatz zu versehen. Der schaumbildende Brandschutzzusatz kann aus den vorstehend im Zusammenhang mit dem ersten Ausführungsbeispiel angebenen Komponenten zusammengesetzt sein.

Bei dem Verfahren zur Herstellung einer Dämmung, nämlich einer Brandschutzschicht 13 bzw. 18, wird der schaumbildende Brandschutzzusatz zunächst zum Phenolharz hinzugegeben und dann homogen mit diesem vermischt. Danach wird das Phenolharz mit Härter und Treibmittel versetzt und wiederum homogenisiert. Die so entstandene Paste wird mit Hilfe einer üblichen Vorrichtung bei 60° bis 70° C verschäumt und ausgehärtet.

Der in den Brandschutzschichten 13 bzw. 18 enthaltene schaumbildende Brandschutzzusatz ist nach Abschluß des eben beschriebenen Herstellungverfahrens noch nicht aktiviert, sondern im Phenolharz eingeschlossen. Der Brandschutzzusatz wird als Pulver und in einer Menge von etwa 20 % (Gewichtsprozent), bezogen auf die Menge des Phenolharzes vor dem Zusatz des Härters und des Treibmittels, zum Aufschäumen der Phenolharzes dem Phenolharz hinzugegeben. Erst bei starker Wärmeeinwirkung auf den Phenolharzschaum bzw. auf die Abdeckelemente 15 bzw. 21 wird der schaumbildende Brandschutzzusatz aktiviert, um die Poren des Phenolharzschaums zu schließen.

Die Abdeckelemente 15 bzw. 21 mit Brandschutzzusatz können in der üblichen Weise verarbeitet werden, sind aber im Brandfalle über einen längeren Zeitraum unbrennbar und glimmen nicht nach.

In einem anderen Verfahren zur Herstellung der Brandschutzschicht 13 bzw. 18 wird der schaumbildende Brandschutzzusatz bereits bei der Herstellung der Schaumstoffplatten aktiviert. Dadurch sind die Poren von Anfang an geschlossen, so daß auch äußerst schnell auftretende Flammeneinwirkung, d.h. vor Ablauf der Reaktionszeit des schaumbildenden Brandschutzzusatzes, die Brandschutzschicht 13 bzw. 18 nicht verbrennen kann.

## Ansprüche

1. Abdeckelement, insbesondere für Dächer, mit wenigstens einer Dämmung, die wenigstens teilweise aus vorzugsweise Phenolharzschaum gebildet ist, **dadurch gekennzeichnet,** daß der Phenolharzschaum einen schaumbildenden Brandschutzzusatz enthält zur Bildung einer Brandschutzschicht (13, 18).

2. Abdeckelement nach Anspruch 1, dadurch gekennzeichnet, daß der schaumbildende Brandschutzzusatz aus einem Material besteht, das erst oberhalb der Verarbeitungstemperatur des Phenolharzes wirksam ist, insbesondere bei Temperaturen oberhalb von 180° bis 200° C, zum Ausschäumen der Poren des Phenolharz harzschaumes im Brandfalle.

3. Abdeckelement nach Anspruch 1 oder 2, dadurch gekennzeichnet, daß der schaumbildende Brandschutzzusatz in einer Menge von 20 % (Gewichtsprozent), bezogen auf die Menge des Phenolharzes, im Phenolharzschaum enthalten ist.

4. Abdeckelement nach einem der Ansprüche 1 bis 3, dadurch gekennzeichnet, daß der schaumbildende Brandschutzzusatz pulverförmig ist.

5. Abdeckelement nach einem oder mehreren der Ansprüche 1 bis 4, dadurch gekennzeichnet, daß der schaumbildende Brandschutzzusatz aus einem Kohlenstofflieferanten, Treibmittel und Schaumstabilisator sich zusammensetzt.

6. Abdeckelement nach Anspruch 5, dadurch gekennzeichnet, daß als Kohlenstofflieferant Pentaerythrit, Dextrin, Weizenstärke und/oder Kartoffelstärke, als Treibmittel Harnstoff, Melamin oder Dicyandiamid und als Schaumstabilisator Phosphat, insbesondere Ammoniumphosphat, dient.

7. Abdeckelement nach Anspruch 5 oder 6, dadurch gekennzeichnet, daß der schaumbildende Brandschutzzusatz zusätzlich ein Bindemittel, insbesondere Polyvenylacetatcopolymer, enthält.

8. Abdeckelement nach Anspruch 1 sowie einem oder mehreren der weiteren Ansprüche, dadurch gekennzeichnet, daß die Dämmung (17) wenigstens eine Brandschutzschicht (13) aus Phenolharzschaum mit dem schaumbildenden Brandschutzzusatz aufweist, die vorzugsweise einer Unterseite der Dämmung (17) zugeordnet ist.

9. Abdeckelement nach Anspruch 7, dadurch gekennzeichnet, daß die Brandschutzschicht (13) mit einer weiteren Schicht der Dämmung (17), insbesondere einer Dämmschicht (19) ver bunden ist, vorzugsweise durch Kleber.

10. Abdeckelement nach Anspruch 7 oder 8, dadurch gekennzeichnet, daß die Ränder wenigstens der Brandschutzschicht (18) mit einer umlaufenden Profilierung aus vorzugsweise einem Stufenfalz (23) versehen sind.

11. Verfahren zur Herstellung insbesondere einer Dämmung oder eines Teils derselben für ein Abdeckelement, vorzugsweise nach einem oder mehreren der Ansprüche 1 bis 10, bei dem vorzugsweise Phenolharz mit Härter und Treibmittel versetzt und dann verschäumt und ausgehärtet wird, **dadurch gekennzeichnet,** daß dem Phenolharz vor dem Vermischen mit Härter und Treibmittel ein schaumbildender Brandschutzzusatz hinzugefügt und mit diesem vermischt wird.

12. Verfahren nach Anspruch 11, dadurch gekennzeichnet, daß das Gemisch aus Phenolharz und schaumbildenden Brandschutzzusatz homogenisiert wird.

13. Verfahren nach Anspruch 11 oder 12, dadurch gekennzeichnet, daß das Phenolharz unterhalb der Reaktionstemperatur des schaumbildenden Brandschutzzusatzes verschäumt und ausgehärtet wird.

*Fig. 1*

Fig. 2

EP 0 324 893 A1

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 940 667 (ESSEL) <br> * Seite 6, letzter Absatz; Figur 1 * <br> --- | 1,2 | E 04 D 13/16 <br> E 04 D 3/35 <br> C 08 J 9/42 |
| Y | FR-A-2 274 580 (RETIF) <br> * Seite 2, Zeilen 22-36; Seite 3, Zeilen 1-2,21-30,36-39; Seite 4, Zeilen 1-2,13-22; Seite 5, Zeilen 19-34; Seite 6, Zeilen 30-35; Seite 7, Zeilen 11-32; Seite 8, Zeilen 16-32; Seite 9, Zeilen 2-15 * | 1,2 | |
| A | | 3,8,11-13 | |
| A | GB-A-2 052 306 (KEEN) <br> * Seite 1, Zeilen 19-65; Seite 2, Zeilen 1-16; Seite 3, Zeilen 6-37 * <br> --- | 1,5-7,11 | |
| A | FR-A-1 461 864 (HARTMEYER) <br> * Seite 1, Spalte 1, Absatz 5; Spalte 2, Absatz 1; Seite 3, Beispiel 1 * <br> --- | 1,5,6 | |
| A | GB-A-1 042 762 (FARBWERKE HOECHST) <br> * Seite 1, Zeilen 63-86; Seite 2, Zeilen 1-40 * <br> --- | 1,5-8,11 | **RECHERCHIERTE SACHGEBIETE (Int. Cl.4)** <br> E 04 D <br> C 08 J |
| A | US-A-3 079 730 (DONEGAN) <br> * Spalte 4, Zeilen 13-27; Figuren 1,2,5 * <br> --- | 8,10 | |
| L,E | DE-A-3 700 339 (MARZOUK) <br> * Insgesamt * Von Interesse für die Anerkennung des Prioritätsanspruches <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 12-04-1989 | HENDRICKX X. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument